# EUROPEAN PATENT SPECIFICATION

(11) **EP 3 601 128 B1**
(45) Date of publication and mention of the grant of the patent: **28.04.2021**
(21) Application number: 18710317.1
(22) Date of filing: 01.02.2018
(51) Int. Cl.: B65H 75/40, B65H 75/44, F16B 7/14

(54) **REELING APPARATUS FOR SPOOLING A FLEXIBLE MEMBER THEREFROM**
WICKELVORRICHTUNG ZUM WICKELN EINES FLEXIBLEN ELEMENTS DAVON
APPAREIL D'ENROULEMENT POUR ENROULER UN ÉLÉMENT SOUPLE À PARTIR DE CE DERNIER

(30) Priority: 27.03.2017 DE 102017002951
(43) Date of publication of application: 05.02.2020
(73) Proprietor: Husqvarna AB, 561 82 Huskvarna (SE)
(72) Inventor: FREY, Reiner, 89231 Neu-Ulm (DE)
(74) Representative: Finkele, Rolf
(86) International application number: PCT/EP2018/052565
(87) International publication number: WO 2018/177626

(56) References cited:
- EP-A1- 2 397 432
- EP-A1- 2 977 342
- DE-A1- 2 618 065
- US-A1- 2008 029 639

## Description

### TECHNICAL FIELD

The present disclosure relates to a reeling apparatus for spooling a flexible member therefrom, and more particularly to a clasping element for releasably locking a position of a telescopic handle relative to a body of the reeling apparatus.

### BACKGROUND

Various types of flexible members such as hoses, cables, ropes, chains and the like are well known in the art to have applicability for use in performing various types of functions. In an example, a hose can be used for communicating fluid from one point of location to another. In another example, a cable, a rope, or a chain may be used to mechanically connect or keep taut two objects together.

Lately, these flexible members have been wound on spools to allow easy dispensing of the flexible members from the spools. Also, it has become common to persons skilled in the art to rotatably mount such spools on a frame to allow easy handling of the spool. Further, the frames are being provided with a handle to facilitate transportation of such spools from one location to another.

In traditional designs of such spooling arrangements, the handles of the spooling arrangements would be made fixed in position relative to the frame of the spooling arrangement. Although, these fixed position handles allowed for users to handle spools, their nature of fixed position may have caused inconvenience to users in that a user may desire to keep the handle within easy reach when using or transporting such spooling arrangements from one location to another. With the fixed position of the handle, it became increasingly difficult for users to keep the handle within easy reach as the handle may not be of sufficient height so as to be within easy reach of the user.

Moreover, these users would also desire that the traditionally known spooling arrangements be rendered in a compact amount of space when not in use, for example, during storage or transportation. However, the fixed position of the handle and its protuberance from the frame of the spooling arrangement, if any, may have caused hindrance for users to compactly store or transport the traditionally known spooling arrangements.

Recently, there have been advancements made to the handle in that the handle of the spooling arrangement has been incorporated with an adjustable positioning feature. However, conventional adjustment mechanisms developed for imparting the adjustability feature to the handle have one drawback or another. For example, with use of one such conventional adjustment mechanism, it was only possible to adjust a height of the handle relative to the frame in incremental steps. Although such a conventional adjustment mechanism allowed for adjustable positioning of the handle relative to the frame, it could do so in incremental steps of pre-determined lengths and this would not allow users to customize and set the height of the handle so as to keep the handle within the reach of the user.

Moreover, when in the locked position, such conventional adjustment mechanisms may not be able to effectively secure the position of the handle relative to the frame with sufficient force so as to prevent the handle and/or the frame from undergoing inter-relative movement in relation to one another. For instance, with use of another one of such conventional adjustment mechanisms, the handle would not even be sufficiently restricted from movement to adequately support a weight of the frame, the spool, and the flexible member thereon during use or transportation of the traditionally known spooling arrangements.

The US Patent Application Publication 2008/0029639 A1 discloses a device for winding and unwinding hoses, cables or the like. The device consists of a wheeled undercarriage with a support. The support is telescopic, as it is formed of lower pipes over which two upper pipes are provided in a sliding manner. The telescopic support allows to adjust the height in incremental steps.

Another example is provided by DE2618065A1 which discloses a suction tube assembly for a vacuum cleaner that has a friction ring located between an inner and an outer tube. The friction ring is made from plastic is attached to the inner tube by means of a rivet. A flat on the outside diameter of the friction ring and a similar flat on the outer tube are separated by a small radial gap. In order to lock the two tubes together, they have to be twisted against each other which causes the friction ring flat to wedge itself against the outer tube.

Yet another example is provided by EP2397432A1 which discloses a reel hose cart which comprises the features of the preamble of claim 1. A frame top element acts as manoeuvring handle and two frame diverging bottom elements, one of which is equipped with wheels, act as support base on the ground. The top element of frame is formed by a central gripping part and by a pair of parallel side wings inserted in respective through holes of the side plates and blockable in axially adjustable position by means of openable lever clamps. The two wings of handle are blocked by friction inside the respective holes of the plates and the user may use handle to move the cart.

In yet another example, EP2977342B1 discloses a supporting device for a pipe. The supporting device is provided with a reel, whereon the pipe is wound, a base surface defining a supporting plane for the reel on the ground, a gripping element movable from an extended position to a contracted position. In the contracted position, the gripping element is nested inside the base surface.

Hence, in light of the foregoing, there is a need for a reeling apparatus that overcomes the aforementioned drawbacks.

### SUMMARY

In view of the above, it is an objective of the present invention to solve or at least reduce the drawbacks discussed above. The objective is at least partially achieved by a reeling apparatus, according to an embodiment of the present invention. The reeling apparatus can be used for spooling a flexible member therefrom. The reeling apparatus includes a body defining a first cylindrical passageway extending axially therethrough, and a first recess located partway along a length of the first cylindrical passageway. The first recess also extends radially away from an axis of the first cylindrical passageway to be bound by a plurality of walls associated with the body in which the plurality of walls are arranged in a polygonal configuration about the axis of the first cylindrical passageway.

The reeling apparatus also includes a telescopic handle slidably disposed in the first cylindrical passageway and extending through the first recess. Further, the reeling apparatus also includes a clasping element that is located in the first recess and co-axially disposed about the telescopic handle. The clasping element has an outer circumference defining at least one bulged portion thereon. The clasping element is rotatable about the axis between an unlocked position in which the bulged portion is disposed exterior to the first recess so as to be located outwards of the body, and a locked position in which the bulged portion is located within the first recess and wedged between an outer circumference of the telescopic handle and at least one proximate wall from the plurality of walls so as to lock a position of the telescopic handle in relation to the body.

According to an embodiment, the plurality of walls from the body may include at least a pair of walls disposed in a spaced-apart relation to one another. In a further aspect of this embodiment, the first recess may be located between the pair of walls. Moreover, the body of the reeling apparatus may be configured to define a second recess located adjacent to the proximate wall and disposed in a side-by-side relation to the first recess.

According to an embodiment, the clasping element includes a tab portion extending tangentially from a width of the clasping element. Further, the proximate wall is configured to terminate partway along a depth of the first recess to facilitate the tab portion of the clasping element to remain flush with an exterior of the body while the clasping element is disposed in the locked position. Moreover, a length of the tab portion is configured to terminate partway along a width of the second recess such that a portion of the second recess remains open for insertion of an appendage to rotate the clasping element via the tab portion of the clasping element about the axis.

According to the invention, when the clasping element is disposed co-axially about the telescopic handle in the unlocked position, the clasping element and the telescopic handle together define an annular gap located between the outer circumference of the telescopic handle and an inner circumference of the clasping element. Subsequently, when the clasping element is rotated into the closed position, the clasping element is configured to elastically deform *vis-à-vis* the wedged bulged portion such that the clasping element at least partially diminishes the annular gap to abut with the outer circumference of the telescopic handle and clasp the telescopic handle.

According to an embodiment, an angular motion associated with movement of the clasping element between the unlocked and locked positions is in a range of 30-105 degrees. In a particular embodiment, the range of angular motion associated with movement of the clasping element between the unlocked and locked positions is approximately about 90 degrees.

According to an embodiment, each of the body and the clasping element is made of a molded plastic material or a thermoplastic material, and the telescopic handle is made of metal. In an embodiment, the reeling apparatus disclosed herein may be a hose reeling apparatus and the flexible member may be correspondingly embodied in the form of a hose. In other embodiments, the reeling apparatus disclosed herein may be one of a cable reeling apparatus, a rope reeling apparatus, and a chain reeling apparatus, and the flexible member may be correspondingly embodied in the form of one of a cable, a rope, and a chain respectively.

Embodiments of this present invention are also independently directed to a body and a clasping element of the reeling apparatus disclosed herein.

Other features and aspects of this disclosure will be apparent from the following description and the accompanying drawings.

### BRIEF DESCRIPTION OF THE DRAWINGS

The invention will be described in more detail with reference to the following drawings, wherein:
FIG. 1 illustrates a front perspective view of a reeling apparatus having a body and showing a handle slidably connected to the body, according to an embodiment of the present invention;
FIG. 2 illustrates a front sectional view of the reeling apparatus taken along sectional plane AA' of FIG. 1, according to the embodiment of FIG. 1;
FIG. 3 illustrates a side orthogonal view of the reeling apparatus having a clasping element disposed in an unlocked position and shown in a zoomed-in sectional view taken along sectional plane BB' of the side orthogonal view of FIG. 3 and located alongside thereof, according to the embodiment of FIG. 1;
FIG. 4 illustrates a side orthogonal view of the reeling apparatus with the clasping element being disposed in a locked position and shown in a zoomed-in side orthogonal view alongside the side orthogonal view of FIG. 4, according to the embodiment of FIG. 1; and
FIG. 5 illustrates a zoomed-in sectional view of the clasping element taken along sectional plane CC' of FIG. 4 when disposed in the locked position, according to the embodiment of FIG. 1.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as being limited to the embodiments set forth herein; rather, these embodiments are provided so that this disclosure will be thorough and complete, and will fully convey the scope of the invention to those skilled in the art. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

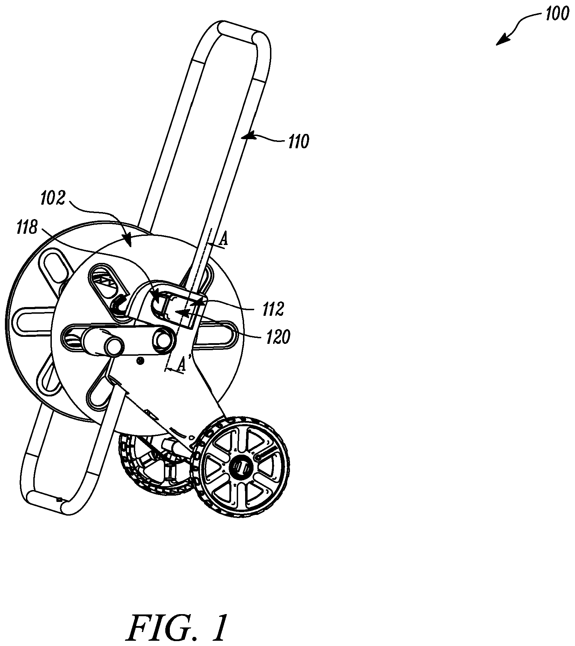

FIG. 1 illustrates a front perspective view of a reeling apparatus 100, according to an embodiment of the present invention. The reeling apparatus 100 disclosed herein can be used to retractably dispense a flexible member (not shown) therefrom. The flexible member has been wilfully omitted from the accompanying drawings for the sake of simplicity and convenience in understanding the present disclosure.

In the illustrated embodiment of FIG. 1, a type of flexible member retractably dispensed from the reeling apparatus 100 may include a hose, and therefore, the reeling apparatus 100 shown in FIG. 1 can be regarded as being embodied for use as a hose reeling apparatus. Nevertheless, in other embodiments, the reeling apparatus 100 may be embodied to retractably dispense other types of flexible members including, but not limited to, a cable, a rope, a chain and the like. Such other types of flexible members may be used in lieu of the hose depending on specific requirements of an application, and accordingly, the reeling apparatus 100 may be regarded as being embodied for use in such other applications as a cable reeling apparatus, a rope reeling apparatus, or a chain reeling apparatus respectively.

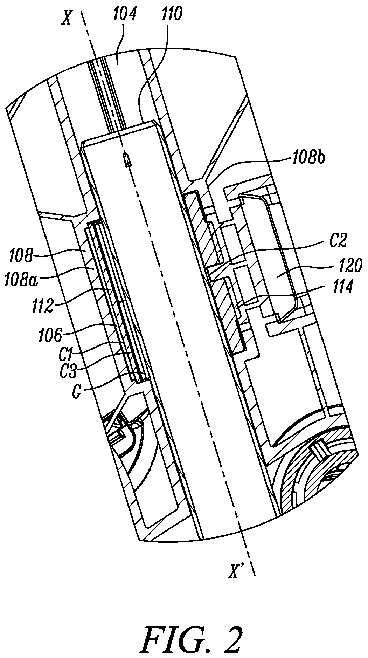

Referring to FIGS. 1-2, the reeling apparatus 100 includes a body 102. The body 102 is configured to define a first cylindrical passageway 104 extending axially therethrough. The body 102 is further configured to define a first recess 106 located partway along a length of the first cylindrical passageway 104 as best shown in FIG. 2. The first recess 106 also extends radially away from an axis XX' of the first cylindrical passageway 104 to be bound by a plurality of walls 108 associated with the body 102 in which the plurality of walls 108 are arranged in a polygonal configuration about the axis XX' of the first cylindrical passageway 104. As shown in the illustrated embodiment of FIG. 2, the plurality of walls 108 from the body 102 may include at least a pair of walls 108a, 108b disposed in a spaced-apart relation to one another. In this embodiment, the first recess 106 may be located between the pair of walls 108a, 108b.

With continued reference to FIGS. 1 and 2, the reeling apparatus 100 also includes a telescopic handle 110 slidably disposed in the first cylindrical passageway 104 and extending through the first recess 106. Further, the reeling apparatus 100 also includes a clasping element 112 that is located in the first recess 106 and co-axially disposed about the telescopic handle 110. The clasping element 112 has an outer circumference C1 defining at least one bulged portion 114 thereon.

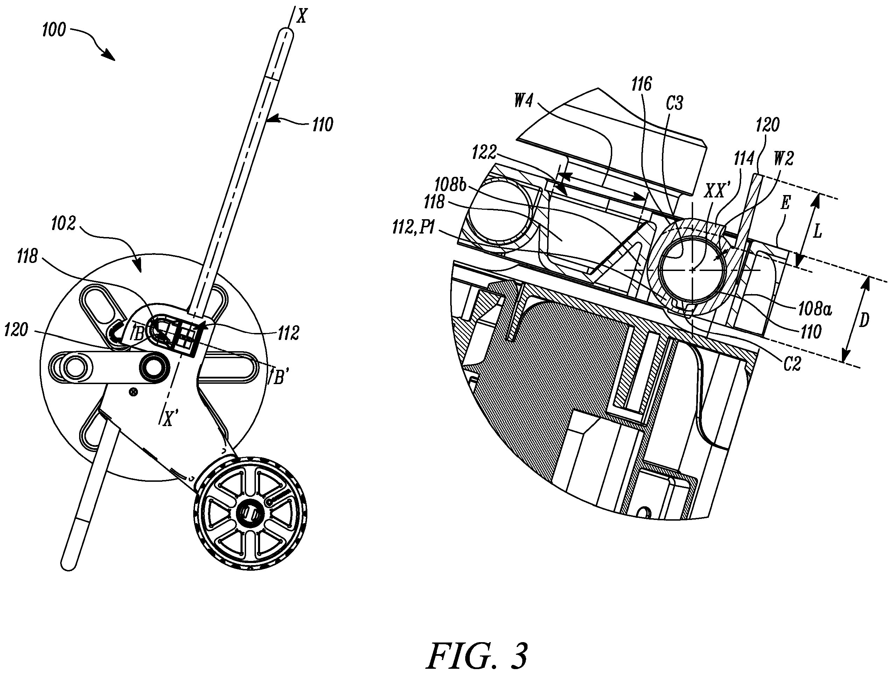

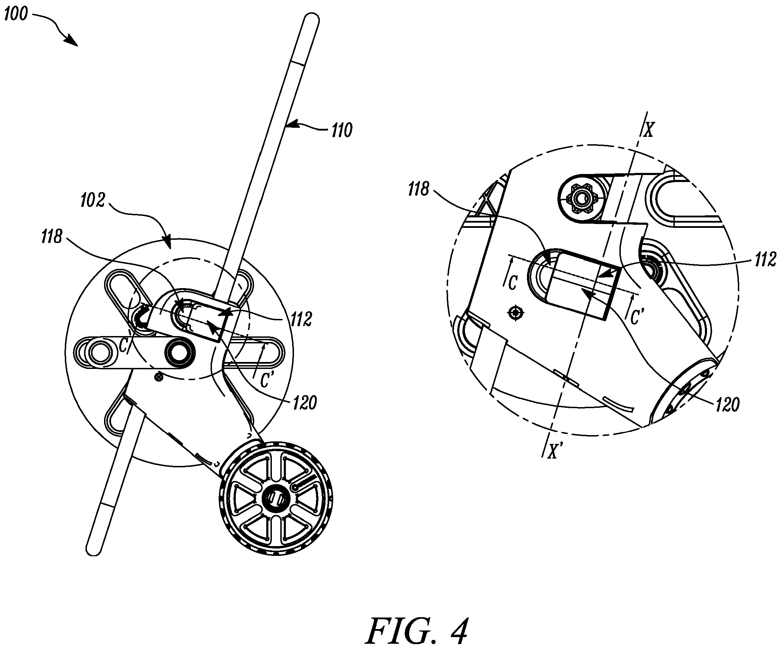

The clasping element 112 is rotatable about the axis XX' between an unlocked position PI, as shown in FIG. 3, in which the bulged portion 114 is disposed exterior to the first recess 106 so as to be located outwards of the body 102, and a locked position P2 in which the bulged portion 114 is located within the first recess 106 and wedged between an outer circumference C2 of the telescopic handle 110 and at least one proximate wall 108b from the plurality of walls 108a, 108b so as to lock a position of the telescopic handle 110 in relation to the body 102 as shown in FIGS. 4-5.

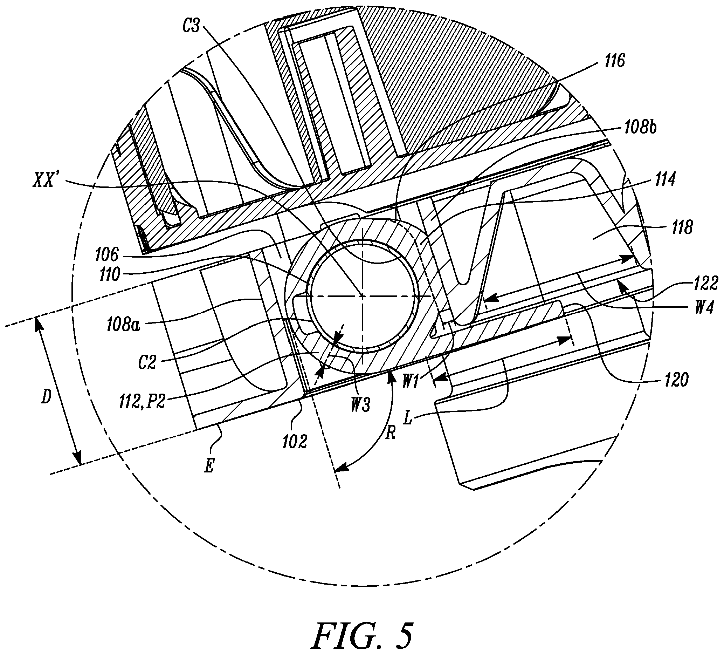

According to an embodiment as shown in FIG. 3, when the clasping element 112 is disposed co-axially about the telescopic handle 110 in the unlocked position PI, the clasping element 112 and the telescopic handle 110 together define an annular gap G located between the outer circumference C2 of the telescopic handle 110 and an inner circumference C3 of the clasping element 112. Subsequently, when the clasping element 112 is rotated into the locked position P2 (shown in FIG. 5), the clasping element 112 is configured to elastically deform *vis-à-vis* the wedged bulged portion 114 such that the clasping element 112 at least partially diminishes the annular gap G to abut with the outer circumference C2 of the telescopic handle 110 and clasp the telescopic handle 110.

In embodiments of this invention, it is contemplated that a width W1 of the bulged portion 114 may be selected to be at least commensurate or marginally thicker when compared to a width W2 of the annular gap G. This way, upon wedging the bulged portion 114 between the proximate wall 108b and the outer circumference C2 of the telescopic handle 110, the clasping element 112 undergoes compression *vis-à-vis* the bulged portion 114 and the annular gap G is diminished to allow at least partial abutment of the inner circumference C3 of the clasping element 112 and the outer circumference C2 of the telescopic handle 110 (refer to FIG. 5) for clasping the telescopic handle 110 and hence, locking a position of the telescopic handle 110 in relation to the body 102. This way, movement of the telescopic handle 110 in relation to the body 102 is prevented when the clasping element 112 is in the locked position P2.

Additionally or optionally, it may be noted that in embodiments herein, it is contemplated that abutment of the inner circumference C3 of the clasping element 112 with the outer circumference C2 of the telescopic handle 110, partial or otherwise, generally occurs in a form-fitting manner to help facilitate the clasping element 112 in clasping the telescopic handle 110 effectively, and thereby restricting the movement of the telescopic handle 110 in relation to the body 102.

As shown in FIGS. 3 and 5, the body 102 of the reeling apparatus 100 may be configured to define a second recess 118 located adjacent to the proximate wall 108b and disposed in a side-by-side relation to the first recess 106. According to an embodiment as shown in FIGS. 1-5, the clasping element 112 includes a tab portion 120. As best shown in FIGS. 3 and 5, the tab portion 120 extends tangentially from a width W3 of the clasping element 112. Further, in this embodiment, the proximate wall 108b may be configured to terminate partway along a depth D of the first recess 106 to facilitate the tab portion 120 of the clasping element 112 to remain flush with an exterior E of the body 102 while the clasping element 112 is disposed in the locked position P2. Moreover, a length L of the tab portion 120 is configured to terminate partway along a width W4 of the second recess 118 such that a portion of the second recess 118 remains open for insertion of an appendage to rotate the clasping element 112 via the tab portion 120 of the clasping element 112 about the axis XX' when the clasping element 112 is disposed in the locked position P2.

By configuring the proximate wall 108b to terminate partway along the depth D of the first recess 106, the tab portion 120 of the clasping element 112 can remain flush with the exterior E of the body 102 to minimize a possibility of being accidently or inadvertently turned about the axis XX' by a user from the locked position P2 (refer to FIG. 5) towards the unlocked position P1 (refer to FIG. 3). In fact, in order to rotate the clasping element 112 from the locked position P2 towards the unlocked position PI, it would be required for the user to insert an appendage, for example, a finger at least partially into the second recess 118 *i.e.,* through the open portion 122 of the second recess 118 (refer to FIG. 5) and rotate the tab portion 120 of the clasping element 112 about the axis XX'. This way, when the clasping element 112 is in the locked position P2 to restrict a movement of the telescopic handle 110 relative to the body 102, the clasping element 112 can remain protected from being inadvertently or accidentally rotated from the locked to the unlocked position P1.

According to an embodiment, an angular motion associated with movement of the clasping element 112 between the unlocked and locked positions PI, P2 is in a range of 30-105 degrees. Referring to a particular embodiment shown in FIGS. 3 and 5, it can be seen that the range of angular motion R associated with movement of the clasping element 112 between the unlocked and locked positions PI, P2 is approximately about 90 degrees.

Although certain values for the range of angular movement R have been disclosed herein, it may be noted that other values may be alternatively selected to define the range of angular movement R for the clasping element 112 between the unlocked and locked positions PI, P2 depending upon specific requirements of an application. As such, persons skilled in the art will acknowledge that although 90 degrees is disclosed herein as the preferred range of angular movement R for the clasping element 112 between the unlocked and locked positions PI, P2, the range of angular motion R associated with the clasping element 112 may depend on a portion 116 of the outer circumference C1 of the clasping element 112 on which the bulged portion 114 radially spans. Therefore, in other configurations, the portion 116 of the outer circumference C1 of the clasping element 112 can include angles other than 90 degrees, for example, 85 degrees, degrees, or any other angle may be used to suitably define a span of the bulged portion 114 which in turn, defines the range of angular motion R associated with the clasping element 112, and thereby, helps to establish the positionally functional relationships between the telescopic handle 110 and the body 102 by the clasping element 112, such positionally functional relationships being consistent with features of the present invention when the clasping element 112 is in one of the unlocked and locked positions PI, P2.

Nonetheless, in embodiments of this disclosure, it is envisioned that the range of angular movement R for the clasping element 112 is maintained below 270 degrees, preferably below 180 degrees, and more preferably below 120 degrees. With such finite ranges being implemented for movement of the clasping element 112 between its unlocked and locked positions PI, P2, users of the reeling apparatus 100 can quickly and easily accomplish a movement of the clasping element 112 by rotating the tab portion 120 from the locked position P2 to the unlocked position P1 or *vice-versa* without requiring a significant amount of effort when locking or unlocking a position of the telescopic handle 110 relative to the body 102.

According to an embodiment, each of the body 102 and the clasping element 112 may be made up of a molded plastic material, or a thermoplastic material e.g., Nylon and the telescopic handle 110 may be made up of a metal e.g., Stainless Steel. Rendering the body 102 and the clasping element 112 from a thermoplastic material may advantageously facilitate the clasping element 112 to undergo elastic deformation *vis-à-vis* the bulged portion 114 that is required for wedging the bulged portion 114 between the proximate wall 108b of the body 102 and the outer circumference C2 of the telescopic handle 110 when the clasping element 112 is in the locked position P2.

Moreover, the metal being used to form the telescopic handle 110 may be selected to help facilitate the telescopic handle 110 in adequately withstanding forces of compression encountered when the bulged portion 114 is wedged to elastically deform the clasping element 112 for abutment with the outer circumference C2 of the telescopic handle 110 so as to clasp the telescopic handle 110 and restrict movement of the telescopic handle 110 in relation to the body 102 when the clasping element 112 is in the locked position P2. It may be noted that an amount of compressive force on the telescopic handle 110 disclosed herein may depend on a weight of the reeling apparatus 100. For example, if the weight of the reeling apparatus 100 is 20 kilograms, then the amount of compressive force required on the telescopic handle 110 to support the weight may be about at least 2.04 N (Newton), considering 1 N = 0.101971621297793 kg on earth. The amount of compressive force required on the telescopic handle 110 to adequately support the weight of the reeling apparatus 100 can therefore help facilitate manufacturers in selecting materials that can be used for forming respective ones of the telescopic handle 110, the clasping element 112, and the body 102. It is envisioned that if the choice of materials for the body 102, the clasping element 112 and the telescopic handle 110 allow the elastic deformation of the clasping element 112 in addition to facilitating the telescopic handle 110 in withstanding the required amount of compressive force for supporting a weight of the reeling apparatus 100 when the clasping element 112 is in the locked position P2, then the locked clasping element 112 can facilitate users in transporting the reeling apparatus 100 from one location to another with minimal risk of the telescopic handle 110 becoming disengaged with the body 102 *i.e.,* the telescopic handle 110 becoming free to slide in relation to the body 102.

Various embodiments disclosed herein are to be taken in the illustrative and explanatory sense, and should in no way be construed as limiting of the present disclosure.

Additionally, all numerical terms, such as, but not limited to, "first", "second", or any other ordinary and/or numerical terms, should also be taken only as identifiers, to assist the reader's understanding of the various elements, embodiments, variations and/ or modifications of the present disclosure.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- 100: Reeling apparatus
- 102: Body
- 104: First cylindrical passageway
- 106: First recess
- 108: Plurality of walls
- 108a, 108b: Pair of walls
- 108b: Proximate wall
- 110: Telescopic handle
- 112: Clasping element
- 114: Bulged portion
- 116: Portion of the outer circumference of the clasping element on which the bulged portion spans
- 118: Second recess
- 120: Tab portion
- 122: Open portion of second recess
- XX': Axis of first cylindrical passageway
- C1: Outer circumference of clasping element
- C2: Outer circumference of telescopic handle
- C3: Inner circumference of clasping element
- P1: Unlocked position of clasping element
- P2: Locked position of clasping element
- G: Annular gap
- W1: Width of bulged portion
- W2: Width of annular gap
- W3: Width of clasping element
- D: Depth of first recess
- E: Exterior of body
- L: Length of tab portion
- W4: Width of second recess
- AA': Sectional plane
- BB': Sectional plane
- CC': Sectional plane

## Claims

1. A reeling apparatus (100) for spooling a flexible member therefrom, the reeling apparatus (100) comprising:
a body (102) defining:
a first cylindrical passageway (104) extending axially therethrough;
a first recess (106) located partway along a length of the first cylindrical passageway (104) and extending radially away from an axis (XX') of the first cylindrical passageway (104), the first recess (106) being bound by a plurality of walls (108) associated with the body (102)
a telescopic handle (110) slidably disposed in the first cylindrical passageway (104) and extending through the first recess (106);
**characterized in that** the plurality of walls (108) are arranged in a polygonal configuration about the axis (XX') of the first cylindrical passageway (104); and
a clasping element (112) located in the first recess (106) and co-axially disposed about the telescopic handle (110), the clasping element (112) having an outer circumference (C1) defining at least one bulged portion (114) thereon, the clasping element (112) rotatable about the axis (XX') between an unlocked position (P1) wherein the bulged portion (114) is disposed exterior to the first recess (106) so as to be located outwards of the body (102) and a locked position (P2) wherein the bulged portion (114) is located within the first recess (106) and wedged between an outer circumference (C2) of the telescopic handle (110) and at least one proximate wall (108b) from the plurality of walls (108) so as to lock a position of the telescopic handle (110) in relation to the body (102) and wherein when the clasping element (112) is disposed co-axially about the telescopic handle (110) in the unlocked position (P1), the clasping element (112) and the telescopic handle (110) together define an annular gap (G) located between the outer circumference (C2) of the telescopic handle (110) and an inner circumference (C3) of the clasping element (112), and when the clasping element (112) is rotated into the locked position (P2), the clasping element (112) is configured to elastically deform vis-à-vis the wedged bulged portion (114) such that the clasping element (112) at least partially diminishes the annular gap (G) to abut with the outer circumference (C2) of the telescopic handle (110) and clasp the telescopic handle (110).

2. The reeling apparatus (100) according to claim 1 in which the clasping element (112) includes a tab portion (120) extending tangentially from a width (W3) of the clasping element (112).

3. The reeling apparatus (100) according to claims 1-2 in which the body (102) defines a second recess (118) located adjacent to the proximate wall (108b) and disposed in a side-by-side relation to the first recess (106).

4. The reeling apparatus (100) according to claim 2-3 in which the proximate wall (108b) is configured to terminate partway along a depth (D) of the first recess (106) to facilitate the tab portion (120) of the clasping element (112) to remain flush with an exterior (E) of the body (102) while the clasping element (112) is disposed in the locked position (P2).

5. The reeling apparatus (100) according to claims 2-4 in which a length L of the tab portion (120) is configured to terminate partway along a width (W4) of the second recess (118) such that a portion of the second recess (118) remains open for insertion of an appendage to rotate the clasping element (112) via the tab portion (120) of the clasping element (112) about the axis (XX') when the clasping element (112) is disposed in the locked position (P2).

6. The reeling apparatus (100) according to claim 1 in which an angular motion associated with movement of the clasping element (112) between the unlocked and locked positions (P1, P2) is in a range of 30-105 degrees.

7. The reeling apparatus (100) according to claim 6 in which the range of angular motion (R) associated with movement of the clasping element (112) between the unlocked and locked positions (P1, P2) is approximately about 90 degrees.

8. The reeling apparatus (100) according to claims 1-5 in which the plurality of walls (108) include at least a pair of walls (108a, 108b) disposed in a spaced-apart relation to one another.

9. The reeling apparatus (100) according to claim 8 in which the first recess (106) is located between the pair of walls (108a, 108b).

10. The reeling apparatus (100) according to claims 1-5 in which each of the body (102) and the clasping element (112) is made of at least one of a molded plastic material or a thermoplastic material, and the telescopic handle (110) is made of metal.

11. The reeling apparatus (100) according to claims 1-10 in which the reeling apparatus (100) is a hose reeling apparatus and the flexible member is a hose.

12. The reeling apparatus (100) according to claim 1-10 in which the reeling apparatus (100) is at least one of: a cable reeling apparatus, a rope reeling apparatus, and a chain reeling apparatus, and the corresponding flexible member is at least one of: a cable, a rope, and a chain respectively.

13. A clasping element (112) suitable for being used with the reeling apparatus (100) according to any of the claims 1-12,
wherein the clasping element (112) has an outer circumference (C1) defining at least one bulged portion (114),
**characterized in that**
the clasping element (112) further includes a tab portion (120) extending tangentially from a width (W3) of the clasping element (112).

## Patentansprüche

1. Wickelvorrichtung (100) zum Wickeln eines flexiblen Elements davon, wobei die Wickelvorrichtung (100) umfasst:
einen Körper (102), der folgendes definiert:
einen ersten zylindrischen Durchgang (104), der sich axial durch ihn erstreckt;
eine erste Aussparung (106), die sich teilweise entlang einer Länge des ersten zylindrischen Durchgangs (104) befindet und sich radial von einer Achse (XX') des ersten zylindrischen Durchgangs (104) weg erstreckt, wobei die erste Aussparung (106) durch eine Vielzahl von Wänden (108), die dem Körper (102) zugeordnet sind, gebunden ist;
einen Teleskopgriff (110), der verschiebbar in dem ersten zylindrischen Durchgang (104) angeordnet ist und sich durch die erste Aussparung (106) hin erstreckt;
**dadurch gekennzeichnet, dass** die Vielzahl von Wänden (108) in einer polygonalen Konfiguration um die Achse (XX') des ersten zylindrischen Durchgangs (104) angeordnet ist; und
ein Verriegelungselement (112), das in der ersten Aussparung (106) angeordnet und koaxial um den Teleskopgriff (110) angebracht ist, wobei das Verriegelungselement (112) einen Außenumfang (C1) aufweist, der mindestens einen gewölbten Abschnitt (114) darauf definiert, wobei das Verriegelungselement (112) zwischen einer entriegelten Position (P1) um die Achse (XX') drehbar ist, wobei der gewölbte Abschnitt (114) außerhalb der ersten Aussparung (106) angeordnet ist, um außerhalb des Körpers (102) und einer verriegelten Position (P2) angeordnet zu sein, wobei sich der gewölbte Abschnitt (114) innerhalb der ersten Aussparung (106) befindet und zwischen einem Außenumfang (C2) des Teleskopgriffs (110) und mindestens einer benachbarten Wand (108b) von der Vielzahl von Wänden (108) eingeklemmt ist, um eine Position des Teleskopgriffs (110) in Bezug auf den Körper (102) zu verriegeln, und wobei, wenn das Verriegelungselement (112) in der entriegelten Position (P1) koaxial um den Teleskopgriff (110) angeordnet ist, das Verriegelungselement (112) und der Teleskopgriff (110) zusammen einen Ringspalt (G), der zwischen dem Außenumfang (C2) des Teleskopgriffs (110) und einem Innenumfang (C3) des Verriegelungselements (112) angeordnet ist, definieren, und wenn das Verriegelungselement (112) in die verriegelte Position (P2) gedreht wird, das Verriegelungselement (112) so konfiguriert ist, dass es sich gegenüber dem keilförmig gewölbten Abschnitt (114) elastisch verformt, so dass das Verriegelungselement (112) den Ringspalt (G) zumindest teilweise verkleinert, um am Außenumfang (C2) des Teleskopgriffs (110) zu stoßen und den Teleskopgriff (110) zu umklammern.

2. Wickelvorrichtung (100) nach Anspruch 1, bei der das Verriegelungselement (112) einen Laschenabschnitt (120) aufweist, der sich tangential von einer Breite (W3) des Verriegelungselements (112) erstreckt.

3. Wickelvorrichtung (100) nach einem der Ansprüchen 1 bis 2, bei der der Körper (102) eine zweite Aussparung (118) definiert, die neben der benachbarten Wand (108b) angeordnet und in Bezug auf die erste Aussparung (106) nebeneinander liegend angebracht ist.

4. Wickelvorrichtung (100) nach Anspruch 2 oder 3, bei der die benachbarte Wand (108b) so konfiguriert ist, dass sie teilweise entlang einer Tiefe (D) der ersten Aussparung (106) endet, um zu erleichtern, dass der Laschenabschnitt (120) des Verriegelungselements (112) bündig mit einer Außenseite (E) des Körpers (102) bleibt, während das Verriegelungselement (112) in der verriegelten Position (P2) angeordnet ist.

5. Wickelvorrichtung (100) nach den Ansprüchen 2 bis 4, bei der eine Länge L des Laschenabschnitts (120) so konfiguriert ist, dass sie teilweise entlang einer Breite (W4) der zweiten Aussparung (118) endet, so dass ein Teil der zweiten Aussparung (118) zum Einsetzen eines Anhangs offenbleibt, um das Verriegelungselement (112) über den Laschenabschnitt (120) des Verriegelungselements (112) beim Umklammern um die Achse (XX') zu drehen, wenn das Element (112) in der verriegelten Position (P2) angeordnet ist.

6. Wickelvorrichtung (100) nach Anspruch 1, bei der eine Winkelbewegung, die mit der Bewegung des Verriegelungselements (112) zwischen der entriegelten und der verriegelten Position (P1, P2) verbunden ist, in einem Bereich von 30 bis 105 Grad liegt.

7. Wickelvorrichtung (100) nach Anspruch 6, bei der der Winkelbewegungsbereich (R), der mit der Bewegung des Verriegelungselements (112) zwischen der entriegelten und der verriegelten Position (P1, P2) verbunden ist, ungefähr ca. 90 Grad beträgt.

8. Wickelvorrichtung (100) nach den Ansprüchen 1 bis 5, bei der die Vielzahl von Wänden (108) mindestens ein Paar von Wänden (108a, 108b), die in einem Abstand voneinander angeordnet sind, umfasst.

9. Wickelvorrichtung (100) nach Anspruch 8, bei der sich die erste Aussparung (106) zwischen dem Paar von Wänden (108a, 108b) befindet.

10. Wickelvorrichtung (100) nach den Ansprüchen 1 bis 5, bei der der Körper (102) und das Verriegelungselement (112) jeweils aus mindestens einem geformten Kunststoffmaterial oder einem thermoplastischen Material bestehen, und der Teleskopgriff (110) aus Metall besteht.

11. Wickelvorrichtung (100) nach den Ansprüchen 1 bis 10, wobei die Wickelvorrichtung (100) eine Schlauchaufrollvorrichtung ist und das flexible Element ein Schlauch ist.

12. Wickelvorrichtung (100) nach einem der Ansprüche 1 bis 10, bei der die Wickelvorrichtung (100) mindestens eine der folgenden ist:
eine Kabelaufrollvorrichtung, eine Seilaufrollvorrichtung und eine Kettenaufrollvorrichtung, und das entsprechende flexible Element mindestens eines von: einem Kabel, einem Seil bzw. einer Kette ist.

13. Verriegelungselement (112), das zur Verwendung mit der Wickelvorrichtung (100) gemäß einem der Ansprüche 1 bis 12 geeignet ist,
wobei das Verriegelungselement (112) einen Außenumfang (C1) aufweist, der mindestens einen gewölbten Abschnitt (114) definiert,
**dadurch gekennzeichnet, dass**
das Verriegelungselement (112) ferner einen Laschenabschnitt (120) umfasst, der sich tangential von einer Breite (W3) des Verriegelungselements (112) erstreckt.

## Revendications

1. Appareil d'enroulement (100) pour enrouler un élément souple à partir de ce dernier, l'appareil d'enroulement (100) comprenant :
un corps (102) définissant :
un premier passage cylindrique (104) s'étendant axialement à travers celui-ci ;
un premier évidement (106) situé sur un chemin le long d'une longueur du premier passage cylindrique (104) et s'étendant radialement loin d'un axe (XX') du premier passage cylindrique (104), le premier évidement (106) étant délimité par une pluralité de parois (108) associées avec le corps (102)
une poignée télescopique (110) disposée coulissante dans le premier passage cylindrique (104) et s'étendant à travers le premier évidement (106) ;
**caractérisé en ce que** la pluralité de parois (108) sont disposées dans une configuration polygonale autour de l'axe (XX') du premier passage cylindrique (104) ; et
un organe de serrage (112) situé dans le premier évidement (106) et disposé coaxialement autour de la poignée télescopique (110), l'organe de serrage (112) ayant une circonférence externe (C1) définissant au moins une portion bombée (114) sur celui-ci, l'organe de serrage (112) pouvant tourner autour de l'axe (XX') entre une position déverrouillée (P1) dans laquelle la portion bombée (114) est disposée extérieure au premier évidement (106) de sorte à être située vers l'extérieur du corps (102) et une position verrouillée (P2) dans laquelle la portion bombée (114) est située à l'intérieur du premier évidement (106) et calée entre une circonférence externe (C2) de la poignée télescopique (110) et au moins une paroi proximale (108b) de la pluralité de parois (108) de sorte à verrouiller une position de la poignée télescopique (110) par rapport au corps (102) et dans lequel l'organe de serrage (112) est disposé coaxialement autour de la poignée télescopique (110) dans la position déverrouillée (P1), l'organe de serrage (112) et la poignée télescopique (110) définissent ensemble un vide annulaire (G) situé entre la circonférence externe (C2) de la poignée télescopique (110) et une circonférence interne (C3) de l'organe de serrage (112), et lorsque l'organe de serrage (112) est tourné dans la position verrouillée (P2), l'organe de serrage (112) est configuré pour se déformer élastiquement par rapport à la portion bombée (114) calée de sorte que l'organe de serrage (112) réduit au moins partiellement le vide annulaire (G) pour venir en butée contre la circonférence externe (C2) de la poignée télescopique (110) et serrer la poignée télescopique (110).

2. Appareil d'enroulement (100) selon la revendication 1 dans lequel l'organe de serrage (112) inclut une portion de languette (120) s'étendant tangentiellement à partir d'une largeur (W3) de l'organe de serrage (112).

3. Appareil d'enroulement (100) selon les revendications 1-2 dans lequel le corps (102) définit un deuxième évidement (118) situé adjacent à la paroi proximale (108b) et disposé dans une relation côte-à-côte par rapport au premier évidement (106).

4. Appareil d'enroulement (100) selon la revendication 2-3 dans lequel la paroi proximale (108b) est configurée pour se terminer en partie le long d'une profondeur (D) d'un premier évidement (106) pour faciliter la portion de languette (120) de l'organe de serrage (112) à rester au même niveau qu'un extérieur (E) du corps (102) pendant que l'organe de serrage (112) est disposé dans la position verrouillée (P2).

5. Appareil d'enroulement (100) selon les revendications 2-4 dans lequel une longueur L de la portion de languette (120) est configurée pour se terminer en partie le long d'une largeur (W4) du deuxième évidement (118) de sorte qu'une portion du deuxième évidement (118) reste ouverte pour l'insertion d'une appendice pour tourner l'organe de serrage (112) à travers la portion de languette (120) de l'organe de serrage (112) autour de l'axe (XX') lorsque l'organe de serrage (112) est disposé dans la position verrouillée (P2).

6. Appareil d'enroulement (100) selon la revendication 1 dans lequel un mouvement angulaire associé avec un déplacement de l'organe de serrage (112) entre les positions déverrouillée et verrouillée (P1, P2) est dans une plage de 30-105 degrés.

7. Appareil d'enroulement (100) selon la revendication 6 dans lequel la plage de mouvement angulaire (R) associé avec un déplacement de l'organe de serrage (112) entre les positions déverrouillée et verrouillée (P1, P2) est approximativement environ 90 degrés.

8. Appareil d'enroulement (100) selon les revendications 1-5 dans lequel la pluralité de parois (108) inclut au moins une paire de parois (108a, 108b) disposées dans une relation espacée les unes par rapport aux autres.

9. Appareil d'enroulement (100) selon la revendication 8 dans lequel le premier évidement (106) est situé entre la paire de parois (108a, 108b).

10. Appareil d'enroulement (100) selon les revendications 1-5 dans lequel chacun du corps (102) et de l'organe de serrage (112) est fait d'au moins un d'un matériau plastique moulé ou d'un matériau thermoplastique, et la poignée télescopique (110) est faite de métal.

11. Appareil d'enroulement (100) selon les revendications 1-10 dans lequel l'appareil d'enroulement (100) est un appareil d'enroulement de tuyau et l'élément souple est un tuyau.

12. Appareil d'enroulement (100) selon la revendication 1-10 dans lequel l'appareil d'enroulement (100) est au moins l'un de : un appareil d'enroulement de câble, un appareil d'enroulement de corde, et un appareil d'enroulement de chaîne, et l'élément souple correspondant est au moins l'un de : un câble, une corde, et une chaîne respectivement.

13. Élément de serrage (112) adapté pour être utilisé avec l'appareil d'enroulement (100) selon l'une quelconque des revendications 1-12,
dans lequel l'organe de serrage (112) a une circonférence externe (C1) définissant au moins une portion bombée (114),
**caractérisé en ce que**
l'organe de serrage (112) inclut en outre une portion de languette (120) s'étendant tangentiellement à partir d'une largeur (W3) de l'organe de serrage (112).
